# EUROPEAN PATENT SPECIFICATION

(11) **EP 1 800 938 B1**
(45) Date of publication and mention of the grant of the patent: **20.05.2009**
(21) Application number: 06125533.7
(22) Date of filing: 06.12.2006
(51) Int. Cl.: B60N 2/28, B60R 22/24

(54) **MOUNTING FOR A SEAT BELT RETRACTOR UNIT**
Halterung für eine Sitzgurteinzugseinheit
Support de rétracteur de ceinture de sécurité

(30) Priority: 22.12.2005 GB 0526112
(43) Date of publication of application: 27.06.2007
(73) Proprietor: Nissan Motor Manufacturing (UK) Ltd., Cranfield, Bedfordshire MK43 0DB (GB)
(72) Inventor: Davies, John Owen, Atsugi-shi Kanagawa 243-0192 (JP)
(74) Representative: Hufton, Victoria Alice

(56) References cited:
- EP-A2- 1 262 383
- DE-U1- 20 317 226
- FR-A1- 2 681 564
- GB-A- 2 357 469
- JP-A- 59 034 958
- US-A- 2 852 270
- US-A- 5 176 402
- US-A1- 2003 173 767

## Description

The present invention relates to a mounting for a roof mounted seat belt retractor unit.

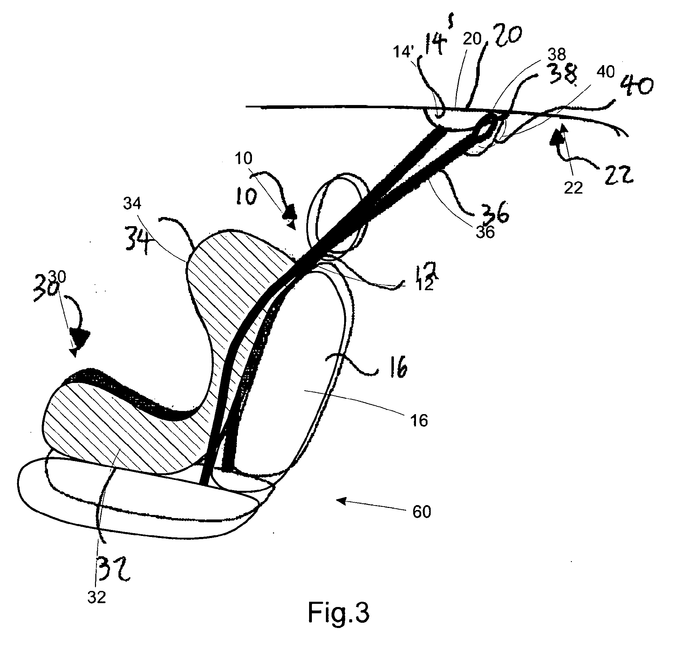

The need for effective, secure child-safety seats is well known. Typically, child seats, and especially those for younger children, comprise a moulded seat having a booster portion and a back portion configured to the requirements of average children between certain ages. Seats of this type are generally secured in position by means of a conventional seat belt, which is threaded through anchorage portions provided in the seat back, as illustrated in Figure 3. In alternative designs the car seat is provided with mechanical latches arranged for interconnection with corresponding brackets mounted to the vehicle body or seat.

US 2 852 270 discloses a seat belt apparatus for a vehicle comprising a flexible belt with a bayonet-type fastener means attached to one end of the belt and a retractor onto which the belt is wound mounted to the vehicle seat. A receptacle type receiving means is provided on the vehicle door behind a cover plate and is arranged to engage with the fastener means using spring-loaded jaws.

DE 203 17 226 U1 discloses a seat belt assembly according to the preamble of claim 1.

A known issue associated with such car seats, however, is their tendency to pitch forward in the event of a frontal impact to a vehicle in which they are secured. Such movement represents a significant hazard not only to a child secured in the child seat, but also to a front seat passenger, or driver sitting in front of the child seat.

One solution to the problem of seat pitching, is to provide the car seat with a top tether, comprising a strip of suitably robust material which, in operation, extends from an upper portion of the child seat to a top tether anchor located at a suitable location within the vehicle. The top tether anchor has to be sufficiently robust to withstand the load exerted by the combined weight of the child and child seat during a typical impact, as specified in appropriate standards and/or legislation. Hence, the top tether anchor has to be mounted in a correspondingly robust location within the vehicle.

One location in which a top tether anchor is sometimes mounted is on the back of a rear seat of the vehicle. However, such a position is difficult to access, thereby making installation of the associated car seat time consuming and prone to potentially hazardous error. The risk of incorrect installation is increased because top tethers secured vi a anchors mounted on the back of the rear seat are difficult to tension sufficiently. Furthermore, location of the anchor on the back of the rear seat can lead to potentially hazardous rear seat deformation during severe impacts.

Alternatively, the top tether anchor is sometimes mounted to a floor or rear panel of a rear luggage area of the vehicle. However, this location also has access difficulties, and results in a significant reduction in luggage area capacity when a correctly tensioned top tether strap extends across the space. Furthermore, items placed in the luggage area can potentially impinge on the strap during impact, resulting in unpredictable effects, and in extreme cases the severing of the tether during impact.

In vehicles having a rear hatch, it is known to mount the top tether anchor internally to the rear roof generally adjacent the glass/hinges of the hatch. However, mounting the anchor in such a location requires reinforcement in order to meet the relevant standards and/or legislation. Such reinforcement represents a relatively expensive addition to the costs of vehicle development, especially where the reinforcement is present solely for the purposes of securing specific child seats.

The present invention provides an improved mounting which significantly mitigates at least some of the above problems.

According to the present invention there is provided a seat belt assembly as specified in claim 1.

Preferable features of the seat belt assembly are set out in the claims dependent from claim 1.

The invention will now be described, by way of example only, with reference to the attached figures in which:
Figure 1 illustrates a roof mounted seat belt installation in a hatchback passenger vehicle according to the prior art;
Figure 2 shows a side view of the roof mounted seat belt installation shown in Figure 1;
Figure 3 shows a child seat secured using a mounting according to the invention;
Figure 4a shows a simplified cross-section of a first embodiment of a mounting according to the invention;
Figure 4b shows a simplified cross-section of a second embodiment of a mounting according to the invention;
Figure 4c shows a simplified cross-section of a third embodiment of a mounting according to the invention; and
Figure 4d shows a simplified cross-section of a fourth embodiment of a mounting according to the invention.

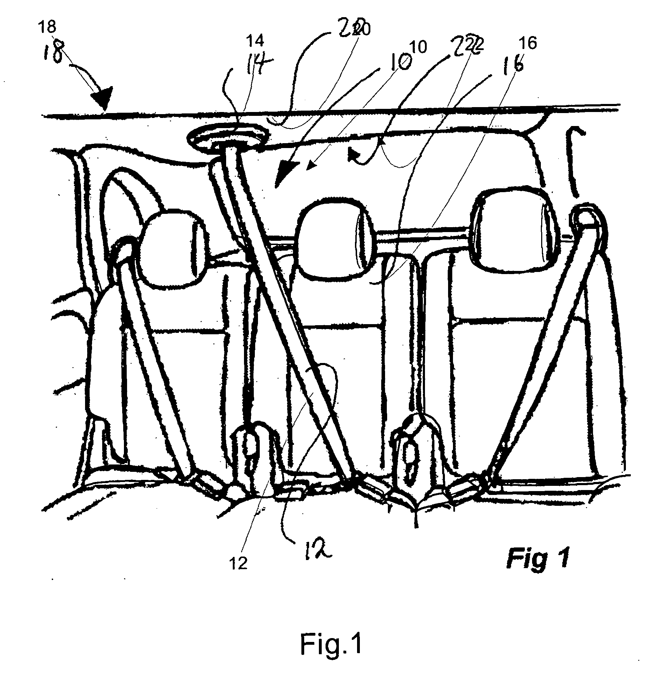

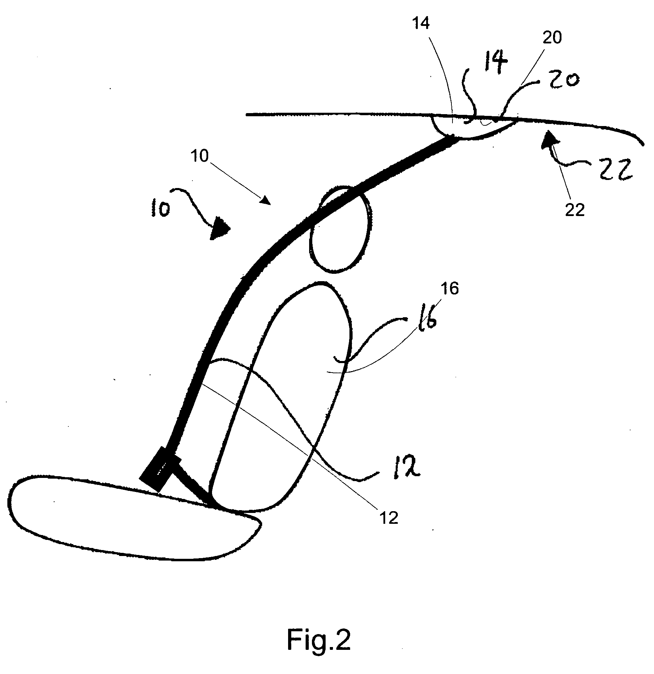

Figures 1 and 2 show a roof-mounted rear seat belt assembly generally at 10. The seat belt assembly comprises a belt portion 12, and a mounting portion 14.

As seen in Figure 1, the roof-mounted rear seat belt assembly is provided for a central rear seat 16 of a hatchback vehicle 18. It will be appreciated however, that roof-mounted seat belts may alternatively or additionally be provided for any occupant of any suitable vehicle.

The mounting portion 14 comprises means for mounting a seat belt retractor unit internally to a reinforced section 20 of the roof 22 of the vehicle 18. The mounting portion 14 is located on the roof 22 of the vehicle 18 between a rear seat and the back of the vehicle.

The seat belt 12 is extendable from and retractable into the retractor unit, in operation, to allow a user to adjust the seat belt 12 to a desired length. It will be appreciated that, although a seat belt retractor unit is described, the mounting may alternatively or additionally comprise roof mounting means for a seat belt assembly of any suitable type, for example an assembly having a roof mounted 'D' loop through which the belt is routed, as opposed to the retractor unit.

The mounting portion is required to be of sufficient robustness to withstand the load exerted by an adult during a frontal impact to the vehicle 18 as defined by relevant standards and/or legislation.

The retractor unit 14 includes means for arresting deceleration induced momentum of a wearer during heavy braking or an impact caused by an accident. Seat belt mountings comprising retractor units having impact arrest means are extremely well known i n the art and will not be described again in detail.

Figure 3 shows a roof-mounted seat belt assembly similar to that of Figures 1 and 2, and like parts are given like reference numerals. The assembly of Figure 3, however, includes a mounting portion 14' according to the invention.

In Figure 3 a child seat is shown generally at 30, in position secured to a rear seat 60 of a vehicle by a roof-mounted seat belt 12. The child seat 30 comprises a moulded seat having a booster portion 32 and a back portion 34 configured to the requirements of an average child of a particular age. The child seat is provided with a top tether 36 for improved impact stability, which extends from an upper portion of the child seat back portion 34.

The mounting portion 14' comprises a seat belt retractor unit mounted to a reinforced portion 20 of a roof 22 of the vehicle, as generally described previously. However, the mounting portion 14' is further provided with means 38 for anchoring the top tether 36, with sufficient tension substantially to prevent the child seat 30 from pitching forward during a frontal impact, heavy braking or similar.

The top tether anchoring means 38 comprises an anchorage portion suitable for engagement with the top tether 36 to robustly secure the tether 36 at the desired tension. Typically, for example, the top tether anchorage portion 38, comprises a "D" loop, a self-locking or open hook, or a downwardly extending anchorage portion having an aperture of suitable shape and dimensions for engagement with a corresponding portion of the tether 36.

The mounting portion 14' is provided with a hinged cover portion for concealing the top tether anchorage portion 38 when not in use.

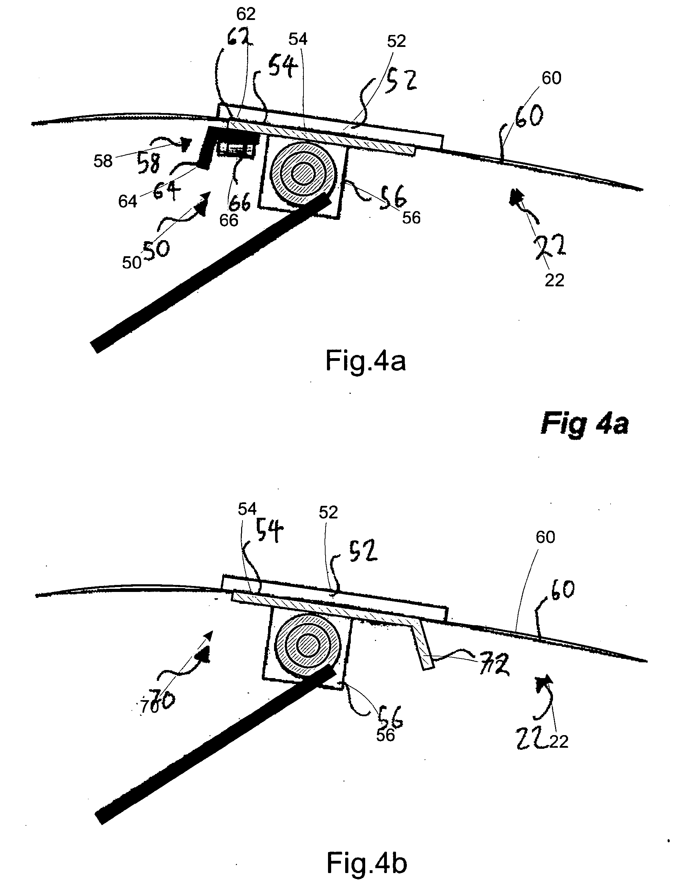

Figures 4a to 4d show four possible embodiments of a mounting portion according to the invention in more detail.

In figure 4a a cross-section of a first embodiment of a mounting portion is shown generally at 50. The mounting portion 50 comprises a reinforcement portion 52, a base plate 54, a seat belt retractor unit 56, and a top tether anchor 58.

The reinforcement portion 52 comprises reinforcement located within the roof 22 of the vehicle between an internal roof layer 60 and an external roof layer (not shown). The reinforcement portion 52 may comprise any suitable reinforcement but typically comprises a steel plate, or the like, robustly secured to a reinforced body shell of the vehicle 18.

In operation the base plate 54 is secured to the reinforcement portion 52 using appropriate means (not shown), for example, bolts, rivets, welding or the like.

The seat belt retractor unit 56 comprises means for allowing the extension and retraction of a seat belt and means for arresting deceleration induced momentum of a wearer as generally described previously. The retractor unit is integral with the base plate 54 although it will be appreciated that alternatively the retractor unit may be fixed to the base plate using appropriate means, for example, bolts, rivets, or the like.

The reinforcement 52, base plate 54, and retractor 56 are configured such that when the base plate 54 is secured to the reinforcement portion 52 the mounting has sufficient structural integrity to withstand the load exerted by an adult wearer of the belt, during a frontal impact to the vehicle 18 as defined by relevant standards and/or legislation.

The top tether anchor 58 comprises a generally planar fixing portion 62, and a tether engagement portion 64 extending at an angle from the plane of the fixing portion 62. The fixing portion 62 is configured for robust mounting to the base plate 54, in operation, using suitable means 66, for example, bolts, rivets, or the like. The engagement portion 64 is configured to extend at an angle downwardly from the mounting 50 when the engagement portion is secured to the base plate 54, in operation. Conveniently, the fixing and engagement portions 62, 64 may be formed from a single section of robust material, for example, steel or the like.

The engagement portion 64 is provided with an aperture (not shown) configured for engagement with a securing portion of a top tether, such as a self-locking hook or the like. It will be appreciated that alternatively, or additionally, the engagement portion may be provided with alternative fixing means, for example, a "D" loop, a self-locking or open hook, or the like.

The top tether anchor 58 is required, in operation, to withstand the load exerted by the combined weight of the child and child seat during a typical impact or heavy braking. Hence, the load endurance requirement of the top tether anchor 58 is significantly less than the load endurance required by the mounting portion. Thus, the load endurance requirements of the top tether anchor are inherently met by the construction of the mounting portion 50. Hence, in operation to secure a car seat having a top tether to a vehicle seat having a roof mounted safety belt assembly, a user may connect the top tether to the engagement portion 64 of the anchor 58, and tension the tether appropriately. The position of the mounting portion 50 provides more convenient access than known locations for top tether anchorage, does not impinge on luggage space, and provides a robust location for top tether anchorage without significant additional vehicle development and/or manufacture costs.

In figure 4b a cross-section of a second embodiment of a mounting portion is shown generally as 70. The mounting portion 70 comprises a reinforcement portion 52, a base plate 54, a seat belt retractor unit 56, as generally described previously with reference to figure 4a and like features are given like reference numerals.

Like the first embodiment, the mounting portion 70 also includes a top tether anchor 72. However, the anchor 72 of the second embodiment is provided integrally with the base plate 54. The top tether anchor 72 comprises a tether engagement portion, which extends at an angle downwardly from the base plate 54, when the base plate 54 is secured to the reinforcement portion, in operation. Conveniently, the base plate 54 and engagement portion 72 may be formed from a single section of robust material, for example, steel or the like.

The engagement portion 72 is provided with an aperture (not shown) configured for engagement with a securing portion of a top tether, such as a self-locking hook or the like. It will be appreciated that alternatively, or additionally, the engagement porti on may be provided with alternative fixing means, for example, a "D" loop, a self-locking or open hook, or the like.

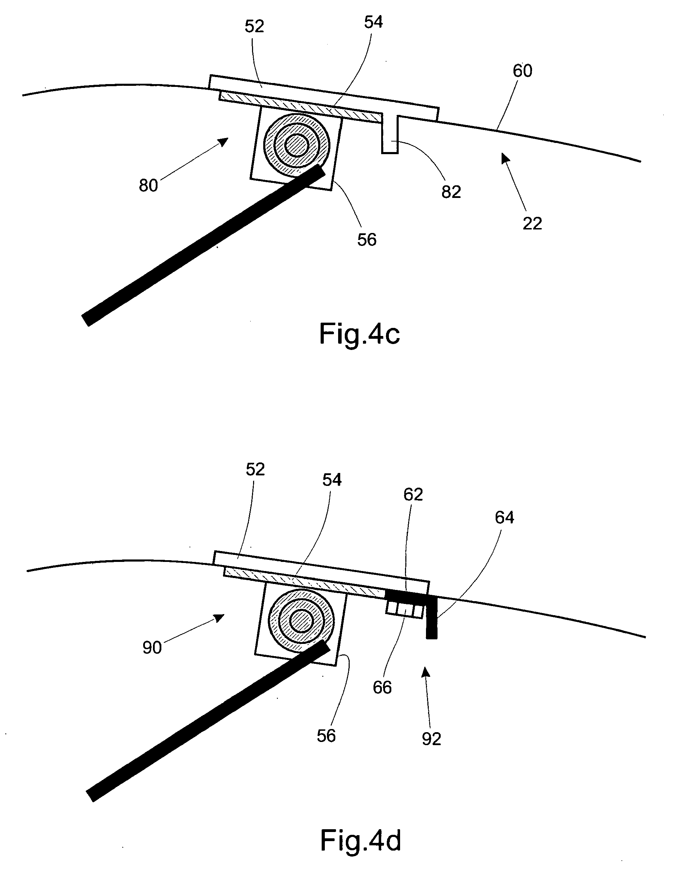

In figure 4c a cross-section of a third embodiment of a mounting portion is shown generally at 80. The mounting portion 80 comprises a reinforcement portion 52, a base plate 54, a seat belt retractor unit 56, as generally described previously with reference to figure 4a and like features are given like reference numerals.

Like the first embodiment, the mounting portion 80 also includes a top tether anchor 82. However, the anchor 82 of the third embodiment is provided integrally with the reinforcement portion 52. The top tether anchor 82 comprises a tether engagement porti on, which extends at an angle downwardly from the reinforcement portion 52. Conveniently, the reinforcement portion 52 and engagement portion 82 may be formed from a single section of robust material, for example, steel or the like.

The engagement portion 82 is provided with an aperture (not shown) configured for engagement with a securing portion of a top tether, such as a self-locking hook or the like. It will be appreciated that alternatively, or additionally, the engagement porti on maybe provided with alternative fixing means, for example, a "D" loop, a self-locking or open hook, or the like.

In figure 4d a cross-section of a fourth embodiment of a mounting portion is shown generally at 90. The mounting portion 90 comprises a reinforcement portion 52, a base plate 54, a seat belt retractor unit 56, as generally described previously with reference to figure 4a and like features are given like reference numerals.

Like the first embodiment, the mounting portion 90 also includes a top tether anchor 92 comprising a generally planar fixing portion 62, and a tether engagement porti on 64 extending at an angle from the plane of the fixing portion 62 as generally described previously. The fixing portion 62 is configured for robust mounting to the reinforcement portion 52, in operation, using suitable means 66, for example, bolts, rivets, or the like. The engagement portion 64 is configured to extend at an angle downwardly from the mounting 50 when the engagement portion is secured to the reinforcement portion 52, in operation. Conveniently, the fixing and engagement portions 62, 64 may be formed from a single section of robust material, for example, steel or the like.

The engagement portion 92 is provided with an aperture (not shown) configured for engagement with a securing portion of a top tether, such as a self-locking hook or the like. It will be appreciated that alternatively, or additionally, the engagement portion may be provided with alternative fixing means, for example, a "D" loop, a self-locking or open hook, or the like.

## Claims

1. A seat belt assembly for a vehicle, comprising:
a seat belt retractor unit (56); and
a mounting (14', 50, 70, 80, 90) comprising a base plate (54) for mounting the seat belt retractor unit (56) to the roof of the vehicle (22);
**characterised in that** the mounting (14' 50, 70, 80, 90) comprises a top tether engagement portion (64, 72, 82) arranged to engage a top tether anchorage (36) of a child seat (30) so that the top tether anchorage is secured to the mounting (14' 50, 70, 80, 90).

2. A seat belt assembly as claimed in claim 1, wherein said base plate (54) is configured for rigid connection to a reinforced portion (52) in the roof of the vehicle between a seat of said vehicle and the back of said vehicle.

3. A seat belt assembly as claimed in claim 1 or claim 2, wherein the top tether engagement portion (72) is integral with said base plate (54).

4. A seat belt assembly as claimed in claim 1 or claim 2, wherein the top tether engagement portion (64) is rigidly mounted to said base plate (54) using fixing means.

5. A seat belt assembly as claimed in claim 1 or claim 2, wherein the top tether engagement portion (82) is integral with said reinforced portion of said vehicle.

6. A seat belt assembly as claimed in any of claims 1 to 5, wherein said base plate (54) is integral with said seat belt retractor unit (56).

7. A vehicle comprising a mounting as claimed in any preceding claim.

## Patentansprüche

1. Sicherheitsgurt-Baugruppe für ein Fahrzeug, die Folgendes umfasst:
eine Sicherheitsgurt-Einzugseinheit (56); und
eine Halterung (14', 50, 70, 80, 90), die eine Grundplatte (54) zum Anbringen der Sicherheitsgurt-Einzugseinheit (56) am Dach des Fahrzeugs (22) umfasst;
**dadurch gekennzeichnet, dass** die Halterung (14', 50, 70, 80, 90) einen Eingriffsabschnitt (64, 72, 82) für einen oberen Haltegurt umfasst, der dazu angeordnet ist, mit einer Verankerung (36) eines oberen Haltegurts eines Kindersitzes (30) in Eingriff zu treten, so dass die Verankerung des oberen Haltegurts an der Halterung (14', 50, 70, 80, 90) befestigt ist.

2. Sicherheitsgurt-Baugruppe nach Anspruch 1, wobei die genannte Grundplatte (54) für die starre Verbindung mit einem verstärkten Abschnitt (52) im Dach des Fahrzeugs zwischen einem Sitz des genannten Fahrzeugs und dem Heck des genannten Fahrzeugs ausgebildet ist.

3. Sicherheitsgurt-Baugruppe nach Anspruch 1 oder Anspruch 2, wobei der Eingriffsabschnitt (72) für den oberen Haltegurt mit der genannten Grundplatte (54) integriert ist.

4. Sicherheitsgurt-Baugruppe nach Anspruch 1 oder Anspruch 2, wobei der Eingriffsabschnitt (64) für den oberen Haltegurt unter Verwendung von Befestigungsmitteln starr an der genannten Grundplatte (54) angebracht ist.

5. Sicherheitsgurt-Baugruppe nach Anspruch 1 oder Anspruch 2, wobei der Eingriffsabschnitt (82) für den oberen Haltegurt mit dem genannten verstärkten Abschnitt des genannten Fahrzeugs integriert ist.

6. Sicherheitsgurt-Baugruppe nach einem der Ansprüche 1 bis 5, wobei die genannte Grundplatte (54) mit der genannten Sicherheitsgurt-Einzugseinheit (56) integriert ist.

7. Fahrzeug, das eine Halterung nach einem der vorangehenden Ansprüche umfasst.

## Revendications

1. Ensemble de ceinture de sécurité, comprenant :
un rétracteur de ceinture de sécurité (56) ; et
un montage (14', 50, 70, 80, 90) comprenant une plaque de base (54) pour attacher le rétracteur de ceinture de sécurité (56) au toit du véhicule (22) ;
**caractérisé en ce que** le montage (14', 50, 70, 80, 90) comprend une partie d'engagement d'attache supérieure (64, 72, 82) agencée pour s'engager avec un ancrage d'attache supérieure (36) d'un siège pour enfant (30) de telle sorte que l'ancrage d'attache supérieure soit fixé au montage (14', 50, 70, 80, 90).

2. Ensemble de ceinture de sécurité selon la revendication 1, dans lequel ladite plaque de base (54) est configurée en vue d'une connexion rigide avec une partie renforcée (52) dans le toit du véhicule entre un siège dudit véhicule et l'arrière dudit véhicule.

3. Ensemble de ceinture de sécurité selon la revendication 1 ou la revendication 2, dans lequel la partie d'engagement d'attache supérieure (72) fait partie intégrante de ladite plaque de base (54).

4. Ensemble de ceinture de sécurité selon la revendication 1 ou la revendication 2, dans lequel la partie d'engagement d'attache supérieure (64) est montée de façon rigide sur ladite plaque de base (54) par des moyens de fixation.

5. Ensemble de ceinture de sécurité selon la revendication 1 ou la revendication 2, dans lequel la partie d'engagement d'attache supérieure (82) fait partie intégrante de ladite partie renforcée dudit véhicule.

6. Ensemble de ceinture de sécurité selon l'une quelconque des revendications 1 à 5, dans lequel la plaque de base (54) fait partie intégrante dudit rétracteur de ceinture de sécurité (56).

7. Véhicule comprenant un montage selon l'une quelconque des revendications précédentes.
